# EUROPÄISCHE PATENTSCHRIFT

(11) **EP 4 612 470 B1**
(45) Veröffentlichungstag und Bekanntmachung des Hinweises auf die Patenterteilung: **11.11.2026**
(21) Anmeldenummer: 23769221.5
(22) Anmeldetag: 13.09.2023
(51) Int. Cl.: G01K 7/42, G01K 13/08

(54) **VERFAHREN ZUM BESTIMMEN EINER TEMPERATUR EINER ELEKTRISCHEN MASCHINE**
METHOD FOR DETERMINING A TEMPERATURE OF AN ELECTRIC MACHINE
PROCÉDÉ DE DÉTERMINATION D'UNE TEMPÉRATURE D'UNE MACHINE ÉLECTRIQUE

(30) Priorität: 31.10.2022 DE 102022211540
(43) Veröffentlichungstag der Anmeldung: 10.09.2025
(73) Patentinhaber: Robert Bosch GmbH, 70442 Stuttgart (DE)
(72) Erfinder: HAHN, Christian, 90419 Nuernberg (DE); FRANK, Stephan, 70376 Stuttgart (DE); KNAPPENBERGER, Uwe, 75417 Muehlacker (DE)
(86) Internationale Anmeldenummer: PCT/EP2023/075151
(87) Internationale Veröffentlichungsnummer: WO 2024/094348

(56) Entgegenhaltungen:
- DE-A1- 102020 214 234
- US-A1- 2007 200 193
- US-A1- 2016 131 534

## Beschreibung

Die vorliegende Erfindung betrifft ein Verfahren zum Bestimmen einer Temperatur einer elektrischen Maschine sowie eine Recheneinheit und ein Computerprogramm zu dessen Durchführung.

### Hintergrund der Erfindung

Zum Bestimmen von Temperaturen in elektrischen Maschinen, etwa zum Bestimmen einer Statortemperatur, können Temperatursensoren in der Statorwicklung der elektrischen Maschine angeordnet werden. Eine derartige Temperaturbestimmung bietet eine gute Abbildung von Alterung, Initialisierung sowie Wärmeeintrag in einen Rotor der elektrischen Maschine.

Beispielsweise können bei einer verteilten Statorwicklung Spulen über mehrere Zahnpole hinweg in Statornuten eingebracht werden, wobei Strangwicklungen ineinander verschachtelt sein können. Bei einer derartigen verteilten Statorwicklung kann ein Temperatursensor beispielsweise in ein Kupferpaket gesteckt und mit Harz überklebt werden. Somit kann ein guter Wärmeübergang zwischen Wicklung und Sensor gewährleistet werden und eine nachträgliche Bearbeitung des Sensorsignals ist nicht notwendig. Beispiele sind in DE 10 2020 214234 A1, US 2016/131534 A1 und US 2007/200193 A1 zu finden.

Im Gegensatz dazu können Statorwicklung auch gemäß einer sog. U-Pin- oder I-Pin-Wicklungstechnik hergestellt werden, wobei U-förmige bzw. geradlinige Kupferflachdrähte als Steckspulen in Statornuten eines Blechpakets eingefügt werden (sog. Steckwicklung). Bei einer derartigen Steckwicklung kann ein entsprechender Temperatursensor oftmals nicht von der Wicklung umschlossen werden, sondern wird mit Hilfe eines Sensorhalters platziert. Ein derartiger Sensorhalter kann das Sensorsignal verzerren und zusätzlich Störungen auf den Sensor erzeugen. Diese Störungen können zum Beispiel durch Luftverwirbelung oder umherfliegendes Öl ausgelöst werden. Eine korrekturfreie Erfassung des Sensorsignals kann dann oftmals nicht mehr möglich sein.

### Offenbarung der Erfindung

Vor diesem Hintergrund werden ein Verfahren zum Bestimmen einer Temperatur einer elektrischen Maschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der abhängigen Ansprüche sowie der nachfolgenden Beschreibung.

Das Bestimmen der Temperatur der elektrischen Maschine, insbesondere einer Temperatur eines Stators der elektrischen Maschine, erfolgt mit Hilfe eines Temperatursensors, welcher zweckmäßigerweise an oder in dem Stator der elektrischen Maschine angeordnet ist. Beispielsweise kann der Temperatursensor als ein Thermistor ausgebildet sein, dessen elektrischer Widerstand sich mit der Temperatur verändert, insbesondere als ein Heißleiter-Thermistor mit negativem Temperaturkoeffizienten (NTC-Thermistor), welcher in einem heißen Zustand elektrisch besser leitet als in einem kalten Zustand.

Mit Hilfe des Temperatursensors wird ein Temperatursensorsignal erfasst, d.h. ein zeitlicher Verlauf von Temperaturmesswerten. Dieses Temperatursensorsignal wird als Eingangssignal einer drehzahlabhängigen Übertragungsfunktion mit einem Proportional-Differenzial-Anteil mit Verzögerung 1. Ordnung zugeführt, insbesondere einem PDT₁-Glied, um ein Temperatursignal der elektrischen Maschine zu erhalten. Insbesondere ist ein den Proportionalanteil kennzeichnender Verstärkungsfaktor der Übertragungsfunktion drehzahlabhängig. Alternativ oder zusätzlich können auch eine den Differenzialanteil kennzeichnender Vorhaltzeit und/oder eine die Verzögerung 1. Ordnung kennzeichnende Verzögerungszeit drehzahlabhängig sein.

Als Ausgangssignal der drehzahlabhängigen Übertragungsfunktion wird ein Temperatursignal erhalten, d.h. ein zeitlicher Verlauf von Temperaturwerten. Aus dem Temperatursignal wird die Temperatur der elektrischen Maschine bestimmt, insbesondere aus dem jeweils aktuellsten Temperaturwert.

Die drehzahlabhängige Übertragungsfunktion mit Proportional-Differenzial-Anteil mit Verzögerung 1. Ordnung kann mittels eines PDT₁-Filters bzw. PDT₁-Glieds implementiert werden, welcher bzw. welches in der Regelungstechnik ein allgemeines rationales Element erster Ordnung darstellt. Die Verwendung eines derartigen drehzahlabhängigen PDT₁-Filters ermöglicht eine hochgenaue Korrektur des Sensorsignals, um etwaige Verzerrungen, Störungen oder Abweichungen ausgleichen zu können. Somit kann die Statortemperatur beispielsweise auch dann präzise und zuverlässig bestimmt werden, wenn der Temperatursensor nicht direkt in die Statorwicklung gesteckt und von dieser umschlossen werden kann, sondern etwa mit Hilfe eines Sensorhalters an bzw. in der Statorwicklung angeordnet wird. Verzerrungen und Störungen durch einen derartigen Sensorhalter sowie Störungen durch Luftverwirbelungen oder umherfliegendes Öl können mit Hilfe des PDT₁-Filters korrigiert und ausgeglichen werden. Abweichung zwischen der mittels des Temperatursensors erfassten Temperatur und der in der Statorwicklung tatsächlich herrschenden Maximaltemperatur (Hotspot) können mit Hilfe des drehzahlabhängigen PDT₁-Filters reduziert oder minimiert werden. Auch können bauliche Vorteile ausgenutzt werden, z.B. Platzierung des Sensors in der Nähe des Hotspots.

Durch die Drehzahlabhängigkeit der Übertragungsfunktion bzw. durch eine Drehzahlabhängigkeit einzelner Parameter der Übertragungsfunktion können beispielsweise eine Kühlluft bzw. eine Lüfterfunktion berücksichtigt werden. Beispielsweise können Lüftungsschlitze im Rotor dazu genutzt werden, Luft zwischen den beiden Wickelkopfbereichen der elektrischen Maschine auszutauschen. Dadurch kann eine drehzahlabhängige Kühlfunktion entstehen, welche durch die Übertragungsfunktion berücksichtig werden kann.

Gemäß einer Ausführungsform ist ein den Proportionalanteil kennzeichnender Verstärkungsfaktor der drehzahlabhängigen Übertragungsfunktion abhängig von der Drehzahl der elektrischen Maschine, insbesondere abhängig von einem drehzahlabhängigen Polynom, ferner insbesondere abhängig von einem drehzahlabhängigen Polynom 2. Ordnung. Der Verstärkungsfaktor kann während des Betriebs der elektrischen Maschine abhängig von dem aktuellen Drehzahlwert beispielsweise direkt mittels mathematischer Formeln berechnet werden oder mit Hilfe einer Kennlinie bzw. eines Kennfeldes abgelesen werden.

Gemäß einer Ausführungsform ist der Verstärkungsfaktor abhängig von einer Sensortemperatur und/oder von einer Kühlfluidtemperatur. Als Sensortemperatur ist insbesondere der aktuelle mit Hilfe des Temperatursensors erfasste Temperaturwert zu verstehen. Als Kühlfluidtemperatur ist insbesondere die aktuelle Temperatur bzw. der aktuelle Temperaturwert des zur Kühlung der elektrischen Maschine verwendeten Kühlfluids, z.B. einer Kühlflüssigkeit oder Kühlluft, insbesondere im Zulauf bzw. Vorlauf zu verstehen.

Gemäß einer Ausführungsform sind eine den Differenzialanteil kennzeichnende Vorhaltzeit bzw. Differenzialzeitkonstante und/oder eine die Verzögerung 1. Ordnung kennzeichnende Verzögerungszeit bzw. Verzögerungszeitkonstante der drehzahlabhängige Übertragungsfunktion drehzahlabhängig. Diese Drehzahlabhängigkeit erlaubt es beispielsweise, vorab eine Kennlinie bzw. ein Kennfeld vorzugeben, anhand welcher bzw. anhand welchem der aktuelle Wert für die Vorhaltzeit und die Verzögerungszeit während des Betriebs abgelesen werden kann.

Gemäß einer Ausführungsform werden die Vorhaltzeit und/oder die Verzögerungszeit jeweils mit Hilfe einer drehzahlabhängigen Kennlinie bestimmt. Die aktuellen Werte für diese Zeitkonstanten können somit auf aufwandsarme Weise abhängig von der aktuellen Drehzahl abgelesen werden. Als Kennlinie kann beispielsweise eine Polynomfunktion bestimmter Ordnung, z.B. 1. oder 2. Ordnung, vorgegeben werden. Auch eine Ermittlung von geeigneten Kennlinien durch versuche ist möglich.

Gemäß einer Ausführungsform wird das Bestimmen des Temperatursignals als Ausgangssignal der drehzahlabhängigen Übertragungsfunktion abhängig von der folgenden Formel durchgeführt: ${T}_{1} ∗ \dot{y} + y = K ∗ \left(u+{T}_{D}∗\dot{u}\right)$

Dabei ist mit *u=u(t)* das zeitabhängige Temperatursensorsignal bezeichnet. Demgemäß ist *ú = du*/*dt* die erste zeitliche Ableitung des Temperatursensorsignals. Ferner ist *y*=*y(t)* das zeitabhängige Temperatursignal und entsprechend ist *ẏ* = *dy*/*dt* die erste zeitliche Ableitung des Temperatursignals. Der Verstärkungsfaktor ist mit *K* bezeichnet, die Vorhaltzeit bzw. Differenzialzeitkonstante mit *T_{D}* und die Verzögerungszeit bzw. Verzögerungszeitkonstante mit *T₁.*

Gemäß einer Ausführungsform wird der Verstärkungsfaktor K gemäß der folgenden Formel bestimmt: $K = \frac{{T}_{Sensor} - {T}_{Fluid} ∗ P}{{T}_{Sensor} ∗ \left(1-P\right)}$

Dabei ist die Sensortemperatur mit *T_{Sensor}* bezeichnet, die Kühlfluidtemperatur mit *T_{Fluid}* und das drehzahlabhängige Polynom mit *P*. Der Verstärkungsfaktor kann somit auf einfache und rechnerisch aufwandsarme Weise während des Betriebs der elektrischen Maschine berechnet werden.

Das drehzahlabhängige Polynom P wird insbesondere bestimmt gemäß der Formel: $P = {a}_{2} ∗ {n}^{2} + {a}_{1} ∗ n + {n}_{0}$

Die Drehzahl der elektrischen Maschine ist dabei mit *n* bezeichnet. Mit *a₂, a₁* und *n₀* sind vorgegebene Konstanten bezeichnet. Das Polynom P lässt sich somit auf rechnerisch aufwandsarme Weise während des Betriebs der elektrischen Maschine berechnen.

Gemäß einer Ausführungsform weist die elektrische Maschine eine Steckwicklung als Statorwicklung, insbesondere gemäß einer U-Pin- oder I-Pin-Wicklungstechnik auf. Eine Temperatur der Steckwicklung wird aus dem Temperatursignal bestimmt. Auch wenn der Temperatursensor beispielsweise nicht in eine derartigen Steckwicklung gesteckt und von dieser umschlossen werden kann, was zu Störungen, Verzerrungen und Abweichungen in dem Sensorsignal führen kann, kann mit Hilfe der drehzahlabhängigen Übertragungsfunktion dennoch die Temperatur der Statorwicklung präzise und zuverlässig bestimmt werden.

Gemäß einer Ausführungsform ist der Temperatursensor an bzw. in der Steckwicklung angeordnet, insbesondere mit Hilfe eines Sensorhalters. Der Temperatursensor kann mit Hilfe des Sensorhalters flexibel an einer zweckmäßigen, konstruktiv einfach zu realisierenden Stelle an dem Stator angeordnet werden, ohne dabei auf die spätere Temperaturmessung Rücksicht nehmen zu müssen. Durch Verwendung des PDT₁-Filters kann die Temperatur des Stators präzise bestimmt werden, unabhängig von der Position, an welcher der Temperatursensor mittels des Sensorhalters relativ zu dem Stator angeordnet ist.

Das vorliegende Verfahren eignet sich insbesondere zur Anwendung im Fahrzeugbereich, z.B. in einem Hybrid- oder Elektrofahrzeug. Mit Hilfe des Verfahrens lässt sich die Temperatur der elektrischen Maschine präzise bestimmen und beispielsweise im Zuge einer Motorsteuerung verwenden.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch eine elektrische Maschine, die einer Ausführungsform des erfindungsgemäßen Verfahrens zu Grunde liegen kann.
- Figur 2: zeigt schematisch eine Ausführungsform des erfindungsgemäßen Verfahrens als ein Blockdiagramm.
- Figur 3: zeigt schematisch Temperatur-Zeit-Diagramm, das im Rahmen einer Ausführungsform des erfindungsgemäßen Verfahrens bestimmt werden kann.
- Figur 4: zeigt schematisch ein Temperatur-Zeit-Diagramm, das im Rahmen einer Ausführungsform des erfindungsgemäßen Verfahrens bestimmt werden kann.

### Ausführungsform(en) der Erfindung

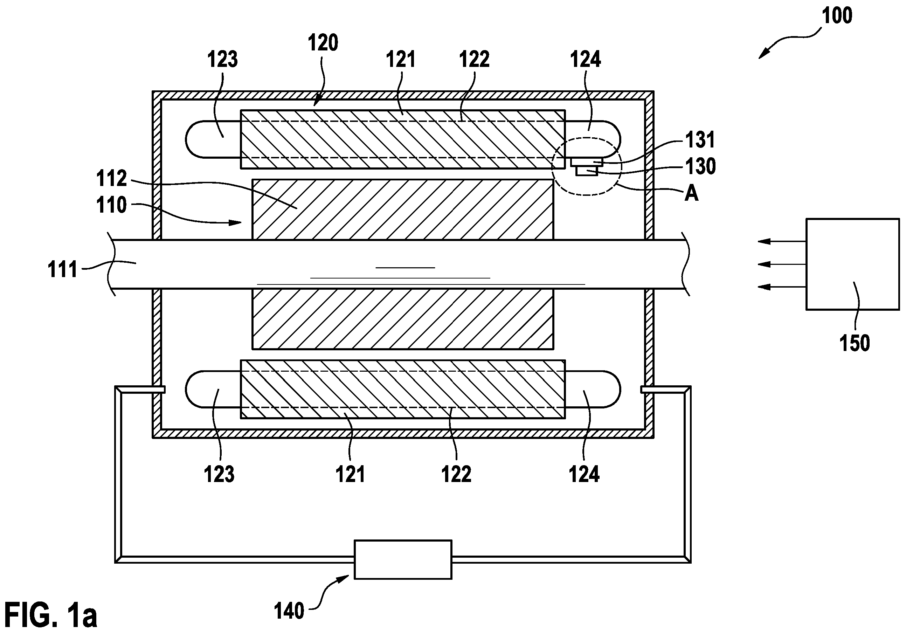

In Figur 1a ist eine elektrische Maschine in einer schematischen Schnittansicht dargestellt und mit 100 bezeichnet. Beispielsweise kann die elektrische Maschine 100 in einem Fahrzeug verwendet werden, z.B. in einem Hybrid- oder Elektrofahrzeug.

Die elektrische Maschine 100 weist einen Rotor 110 auf mit einem auf einer Rotorwelle 111 angeordneten Rotorkörper 112 sowie einen den Rotor 110 umgebenden Stator 120. Der Stator weist einen Statorkörper 121 auf, z.B. ein Blechpaket, in welcher eine Statorwicklung 122 angeordnet ist. Die Statorwicklung 122 steht zu beiden axialen Seiten des Statorkörpers 121 über und bildet dort jeweils einen Wickelkopf 123, 124.

Ein Kühlsystem 140 ist vorgesehen, um ein Kühlfluid, z.B. eine Kühlflüssigkeit wie Öl, durch einen Innenraum der elektrischen Maschine 100 zur Kühlung des Stators 120 zu fördern. Ein Steuergerät 150, z.B. ein Motorsteuergerät des Fahrzeugs, ist zum Steuern der elektrischen Maschine 100 vorgesehen.

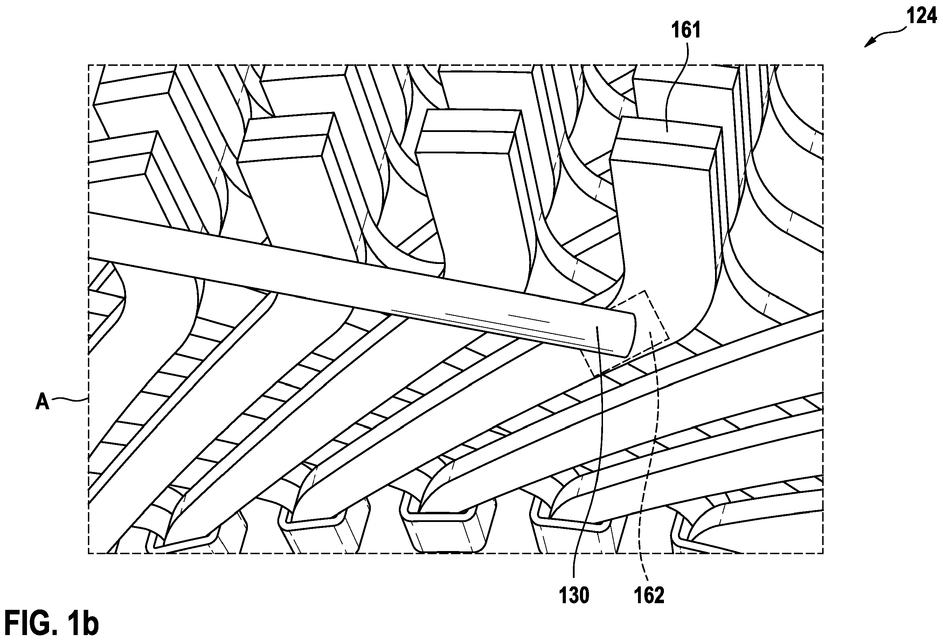

Die Statorwicklung 122 kann beispielsweise eine Steckwicklung basierend auf einer U-Pin Wicklungstechnik sein, wobei U-förmige Kupferflachdrähte als Steckspulen in Statornuten des Statorkörpers 121 eingefügt sind. Der in Figur 1 links dargestellte Wickelkopf 123 wird beispielsweise durch die gebogenen, geschlossenen Enden der U-förmigen Drähte gebildet. Der rechts dargestellte Wickelkopf 124 wird beispielsweise durch die offenen Enden der U-förmigen Drähte gebildet, welche miteinander elektrisch leitend verbunden sind.

An dem rechts dargestellten Wickelkopf 124 ist ein Temperatursensor 130 angeordnet zur Bestimmung einer Temperatur der elektrischen Maschine, insbesondere zur Bestimmung einer Temperatur des Stators 120. Der Temperatursensor 130 ist beispielsweise mit Hilfe eines Sensorhalters 131 an der Statorwicklung 122 angeordnet und kann als ein Heißleiter-Thermistor mit negativem Temperaturkoeffizienten (NTC-Thermistor) ausgebildet sein.

Figur 1b zeigt einen Ausschnitt A des Wickelkopfs 124 in einer schematischen perspektivischen Ansicht.

Wie in Figur 1b angedeutet, kann der Temperatursensor 130, bevorzugt mit Hilfe eines nicht dargestellten Sensorhalters 131, konstruktiv bedingt nicht notwendigerweise an einer Stelle bzw. einem Hotspot 161 angeordnet werden, an welcher bzw. an welchem während des Betriebs der elektrischen Maschine 100 eine Maximaltemperatur in der Statorwicklung 122 herrscht. Mittels des Temperatursensors 130 kann die Temperatur gegebenenfalls nur an einer Stelle 162 gemessen werden, an welcher eine geringere Temperatur als an dem Hotspot 161 herrscht. Somit kann es zu Abweichungen zwischen der von dem Temperatursensor 130 erfassten Temperatur und der Maximaltemperatur der Statorwicklung 122 kommen. Ferner kann das Sensorsignal des Sensors 130 bspw. durch einen Sensorhalter verzerrt werden und es können Störungen des Sensorsignals durch Luftverwirbelung oder umherfliegendes Öl auftreten.

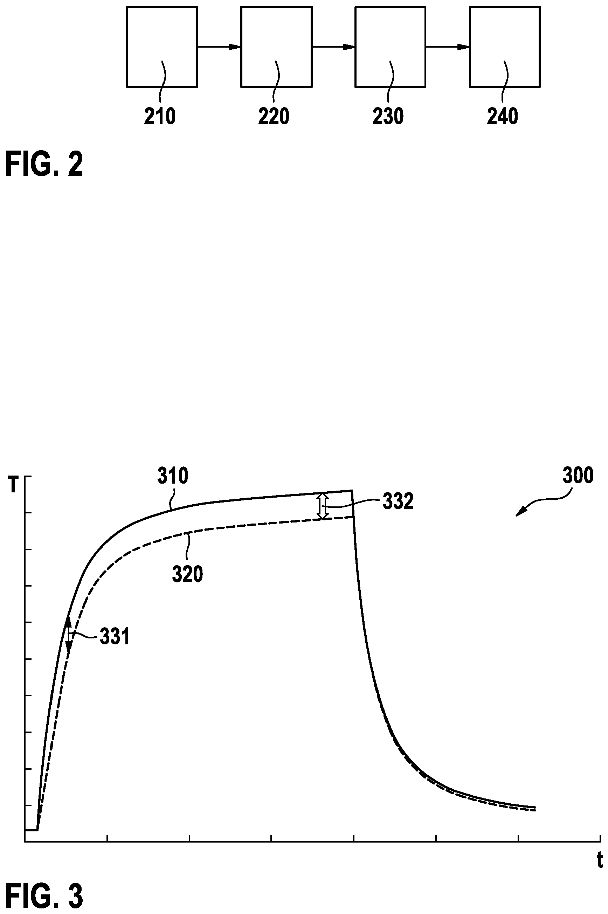

Um die Temperatur des Stators 120 dennoch präzise bestimmen zu können und um derartige Abweichungen, Verzerrungen und Störungen auszugleichen, ist das Steuergerät 150, insbesondere programmtechnisch, dazu eingerichtet, eine Ausführungsform eines erfindungsgemäßen Verfahrens durchzuführen, wie nachfolgend in Bezug auf Figur 2 erläutert wird.

Figur 2 zeigt eine Ausführungsform des erfindungsgemäßen Verfahrens als ein schematisches Blockdiagramm.

In Schritt 210 erfasst das Steuergerät 150 ein Temperatursensorsignal mit Hilfe des Temperatursensors 130. In Schritt 220 wird das Temperatursensorsignal als Eingangssignal einer drehzahlabhängigen Übertragungsfunktion mit einem Proportional-Differenzial-Anteil mit Verzögerung 1. Ordnung, insbesondere einem entsprechenden PDT₁-Filter zugeführt. In Schritt 230 wird das Temperatursensorsignal mit Hilfe des PDT₁-Filters korrigiert und es wird ein Temperatursignal als Ausgangssignal der drehzahlabhängigen Übertragungsfunktion bzw. des PDT₁-Filters bestimmt. In Schritt 240 wird aus dem Temperatursignal eine Temperatur der elektrischen Maschine 100 bzw. des Stators 120 bestimmt. Beispielsweise wird der jeweils aktuellsten Temperaturwert des Temperatursignals als aktuelle Temperatur der Steckwicklung 122 bestimmt.

Das Bestimmen des Temperatursignals mit Hilfe einer drehzahlabhängigen Übertragungsfunktion bzw. des PDT₁-Filters kann, wie oben beschrieben, erfolgen gemäß: ${T}_{1} ∗ \dot{y} + y = K ∗ \left(u+{T}_{D}∗\dot{u}\right)$

Dabei ist mit *u=u(t)* das zeitabhängige Temperatursensorsignal bezeichnet, mit *y=y(t)* das zeitabhängige Temperatursignal, mit *K* ein den Proportionalteil kennzeichnender Verstärkungsfaktor, mit *T_{D}* eine den Differenzialteil kennzeichnende Vorhaltzeit bzw. Differenzialzeitkonstante und mit *T₁* eine die Verzögerung 1. Ordnung kennzeichnende Verzögerungszeit bzw. Verzögerungszeitkonstante.

Obige Gleichung kann mit Hilfe des Euler-Verfahrens bzw. des Rückwärts-Euler-Verfahrens wie folgt diskretisiert werden: ${y}_{n} = \frac{\frac{{T}_{1}}{Δ t} ∗ {y}_{n - 1} + K ∗ \left({u}_{n}+{T}_{D}∗\frac{{u}_{n} - {u}_{n - 1}}{Δ t}\right)}{\left(\frac{{T}_{1}}{Δ t}+1\right)}$

Dabei ist mit *uₙ*=*u(tₙ)* ein aktueller Wert des Temperatursensorsignals bezeichnet, welcher zu einem Zeitpunkt *tₙ* erfasst wird, und mit *uₙ₋₁*=*u(tₙ₋₁)* ein vorheriger Wert des Temperatursensorsignals, welcher zu einem vorherigen Zeitpunkt *tₙ₋₁* erfasst wurde. Diese beiden Zeitpunkte *tₙ* und *tₙ₋₁* definieren das Zeitintervall Δ*t*. Entsprechend bezeichnet *yₙ*=*y(tₙ)* einen aktuellen Wert des Temperatursignals zum Zeitpunkt *tₙ* und *yₙ₋₁*=*y(tₙ₋₁)* ein vorheriger Wert des Temperatursignals zum Zeitpunkt *tₙ₋₁.*

Der Verstärkungsfaktor K ist, wie oben erläutert, insbesondere abhängig von einer Sensortemperatur *T_{Sensor,}* insbesondere einem aktuell mit Hilfe des Temperatursensors 130 erfassten Temperaturwert, von einer Kühlfluidtemperatur *T_{Fluid}*, insbesondere einer aktuellen Temperatur des Kühlfluids des Kühlsystems 140, und von einem drehzahlabhängigen Polynom *P*, ebenfalls wie oben bereits dargestellt.

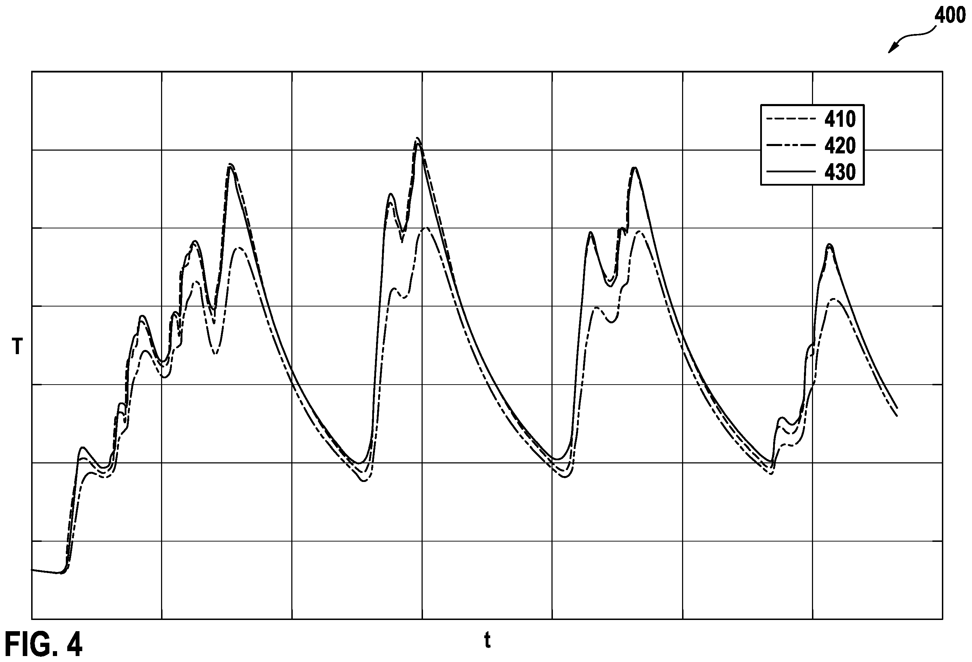

Die Verwendung der drehzahlabhängigen Übertragungsfunktion bzw. des drehzahlabhängigen PDT₁-Filters ermöglicht es, Verzerrungen, Störungen und Abweichungen des Temperatursensorsignals auszugleichen und die Maximaltemperatur der Statorwicklung 122 an dem Hotspot 161 präzise und zuverlässig zu bestimmen, wie nachfolgend anhand der Figuren 3 und 4 erläutert wird.

Figur 3 zeigt schematisch ein Temperatur-Zeit-Diagramm 300. Kurve 310 repräsentiert einen zeitlichen Verlauf der Maximaltemperatur der Statorwicklung 122 an dem Hotspot 161. Kurve 320 repräsentiert die mit Hilfe des Sensors 130 erfassten Temperaturverlauf T_{Sensor} an der Position 162. Wie in Figur 3 zu erkennen ist, kann sich die durch den Sensor 130 erfasste Temperatur 320 von der Maximaltemperatur 310 um eine dynamischen Abweichung 331 oder um eine statische Abweichung 332 unterscheiden.

Figur 4 zeigt schematisch ein Temperatur-Zeit-Diagramm 300, wobei Kurve 410 den zeitlichen Verlauf der Maximaltemperatur der Statorwicklung 122 an dem Hotspot 161 repräsentiert. Kurve 420 repräsentiert das Temperatursensorsignal *u,* das von dem Sensor 130 erfasst und mit Hilfe des drehzahlabhängigen PDT₁-Filters korrigiert wird. Kurve 430 repräsentiert das mit Hilfe des drehzahlabhängigen PDT₁-Filters korrigierte Temperatursignal y. Wie zu erkennen ist, weicht das Temperatursensorsignal 420 von der tatsächlichen Maximaltemperatur 410 in der Statorwicklung ab. Das korrigierte Temperatursignal 430 bildet die Maximaltemperatur 410 hingegen präzise ab.

## Patentansprüche

1. Verfahren zum Bestimmen einer Temperatur einer elektrischen Maschine (100), insbesondere einer Temperatur eines Stators (120) der elektrischen Maschine (100), mit Hilfe eines Temperatursensors (130), umfassend:
Erfassen (210) eines Temperatursensorsignals (420) mit Hilfe des Temperatursensors (130);
**dadurch gekennzeichnet, dass** das Verfahren weiterhin umfasst Zuführen (220) des Temperatursensorsignals (420) als Eingangssignal zu einer drehzahlabhängigen Übertragungsfunktion mit einem Proportional-Differenzial-Anteil mit Verzögerung 1. Ordnung;
Bestimmen (230) eines Temperatursignals (430) als Ausgangssignal der drehzahlabhängigen Übertragungsfunktion;
Bestimmen (240) der Temperatur der elektrischen Maschine (100), insbesondere als Temperatur des Stators (120) der elektrischen Maschine (100), aus dem Temperatursignals (430).

2. Verfahren nach Anspruch 1, wobei ein den Proportionalanteil kennzeichnender Verstärkungsfaktor der drehzahlabhängigen Übertragungsfunktion abhängig von der Drehzahl der elektrischen Maschine ist, insbesondere abhängig von einem drehzahlabhängigen Polynom, insbesondere abhängig von einem drehzahlabhängigen Polynom 2. Ordnung.

3. Verfahren nach Anspruch 2, wobei der Verstärkungsfaktor abhängig ist von einer Sensortemperatur und/oder von einer Kühlfluidtemperatur.

4. Verfahren nach einem der vorstehenden Ansprüche, wobei eine den Differenzialanteil kennzeichnende Vorhaltzeit und/oder eine die Verzögerung 1. Ordnung kennzeichnende Verzögerungszeit der drehzahlabhängige Übertragungsfunktion drehzahlabhängig sind.

5. Verfahren nach Anspruch 4, wobei die Vorhaltzeit und/oder die Verzögerungszeit jeweils mit Hilfe einer drehzahlabhängigen Kennlinie bestimmt werden.

6. Verfahren nach einem der vorstehenden Ansprüche, soweit rückbezogen auf Anspruch 2 und 4, wobei das Bestimmen (230) des Temperatursignals (430) als Ausgangssignal der drehzahlabhängigen Übertragungsfunktion abhängig von der folgenden Formel durchgeführt wird: ${T}_{1} ∗ \dot{y} + y = K ∗ \left(u+{T}_{D}∗\dot{u}\right) ,$
wobei *u* das Temperatursensorsignals (420) ist,
wobei *y* das Temperatursignal (430) ist,
wobei *K* der Verstärkungsfaktor ist,
wobei *T_{D}* die Vorhaltzeit ist,
wobei *T₁* die Verzögerungszeit ist.

7. Verfahren nach einem der vorstehenden Ansprüche, soweit rückbezogen auf Anspruch 2 und 3, wobei der Verstärkungsfaktor bestimmt wird gemäß der Formel: $K = \frac{{T}_{Sensor} - {T}_{Fluid} ∗ P}{{T}_{Sensor} ∗ \left(1-P\right)} ,$
wobei *K* der Verstärkungsfaktor ist,
wobei *T_{Sensor}* die Sensortemperatur ist,
wobei *T_{Fluid}* die Kühlfluidtemperatur ist und
wobei *P* das drehzahlabhängige Polynom ist, insbesondere 2. Ordnung.

8. Verfahren nach einem der vorstehenden Ansprüche, wobei die elektrische Maschine (100) eine Steckwicklung als Statorwicklung (122), insbesondere gemäß einer U-Pin- oder I-Pin-Wicklungstechnik aufweist, und wobei eine Temperatur der Steckwicklung (122) aus dem Temperatursignals (430) bestimmt wird.

9. Verfahren nach Anspruch 8, wobei der Temperatursensor (130) an der Steckwicklung (120) angeordnet ist, insbesondere mit Hilfe eines Sensorhalters (131).

10. Recheneinheit (150), die dazu eingerichtet ist, alle Verfahrensschritte eines Verfahrens nach einem der vorstehenden Ansprüche durchzuführen.

11. Computerprogramm, das eine Recheneinheit (150) dazu veranlasst, alle Verfahrensschritte eines Verfahrens nach einem der Ansprüche 1 bis 9 durchzuführen, wenn es auf der Recheneinheit (150) ausgeführt wird.

12. Maschinenlesbares Speichermedium mit einem darauf gespeicherten Computerprogramm nach Anspruch 11.

## Claims

1. Method for determining a temperature of an electric machine (100), in particular a temperature of a stator (120) of the electric machine (100), by means of a temperature sensor (130), comprising:
capturing (210) a temperature sensor signal (420) by means of the temperature sensor (130);
**characterized in that** the method further comprises supplying (220) the temperature sensor signal (420) as an input signal to a speed-dependent transfer function with a proportional-differential component with a 1st order delay;
determining (230) a temperature signal (430) as the output signal from the speed-dependent transfer function;
determining (240) the temperature of the electric machine (100), in particular as the temperature of the stator (120) of the electric machine (100), from the temperature signal (430).

2. Method according to Claim 1, wherein a gain factor of the speed-dependent transfer function that characterizes the proportional component is dependent on the speed of the electric machine, in particular dependent on a speed-dependent polynomial, in particular dependent on a speed-dependent 2nd order polynomial.

3. Method according to Claim 2, wherein the gain factor is dependent on a sensor temperature and/or on a cooling fluid temperature.

4. Method according to one of the preceding claims, wherein a lead time of the speed-dependent transfer function that characterizes the differential component and/or a delay time of the speed-dependent transfer function that characterizes the 1st order delay is/are speed-dependent.

5. Method according to Claim 4, wherein the lead time and/or the delay time is/are each determined by means of a speed-dependent characteristic curve.

6. Method according to one of the preceding claims, insofar as referring back to Claims 2 and 4, wherein the determination (230) of the temperature signal (430) as the output signal from the speed-dependent transfer function is carried out on the basis of the following formula: ${T}_{1} ∗ \dot{y} + y = K ∗ \left(u+{T}_{D}∗{u}^{⋅}\right) ,$
where u is the temperature sensor signal (420),
where y is the temperature signal (430),
where K is the gain factor,
where T_{D} is the lead time,
where T₁ is the delay time.

7. Method according to one of the preceding claims, insofar as referring back to Claims 2 and 3, wherein the gain factor is determined according to the formula: $K = \frac{{T}_{Sensor} - {T}_{Fluid} ∗ P}{{T}_{Sensor} ∗ \left(1-P\right)} ,$
where K is the gain factor,
where T_{Sensor} is the sensor temperature,
where T_{Fluid} is the cooling fluid temperature, and
where P is the speed-dependent polynomial, in particular the 2nd order polynomial.

8. Method according to one of the preceding claims, wherein the electric machine (100) has a plug-in winding as a stator winding (122), in particular according to a U-pin or I-pin winding technology, and wherein a temperature of the plug-in winding (122) is determined from the temperature signal (430).

9. Method according to Claim 8, wherein the temperature sensor (130) is arranged on the plug-in winding (120), in particular by means of a sensor holder (131).

10. Computing unit (150) which is configured to carry out all the method steps of a method according to one of the preceding claims.

11. Computer program which causes a computing unit (150) to carry out all the method steps of a method according to one of Claims 1 to 9 when it is executed on the computing unit (150).

12. Machine-readable storage medium with a computer program according to Claim 11 stored thereon.

## Revendications

1. Procédé de détermination d'une température d'une machine électrique (100), en particulier d'une température d'un stator (120) de la machine électrique (100), à l'aide d'un capteur de température (130), comprenant les étapes consistant à :
détecter (210) un signal de capteur de température (420) à l'aide du capteur de température (130) ;
**caractérisé en ce que** le procédé consiste en outre à fournir (220) le signal de capteur de température (420) en tant que signal d'entrée à une fonction de transfert dépendant de la vitesse de rotation avec une composante proportionnelle-différentielle ayant un retard d'ordre 1 ;
déterminer (230) un signal de température (430) en tant que signal de sortie de la fonction de transfert dépendant de la vitesse de rotation ;
déterminer (240) la température de la machine électrique (100), en particulier en tant que température du stator (120) de la machine électrique (100), à partir du signal de température (430).

2. Procédé selon la revendication 1, dans lequel un facteur d'amplification, caractérisant la composante proportionnelle, de la fonction de transfert dépendant de la vitesse de rotation dépend de la vitesse de rotation de la machine électrique, dépend en particulier d'un polynôme dépendant de la vitesse de rotation, en particulier d'un polynôme d'ordre 2 dépendant de la vitesse de rotation.

3. Procédé selon la revendication 2, dans lequel le facteur d'amplification dépend d'une température de capteur et/ou d'une température de fluide de refroidissement.

4. Procédé selon l'une des revendications précédentes, dans lequel un temps d'avance caractérisant la composante différentielle et/ou un temps de retard caractérisant le retard d'ordre 1 de la fonction de transfert dépendant de la vitesse de rotation dépendent de la vitesse de rotation.

5. Procédé selon la revendication 4, dans lequel le temps d'avance et/ou le temps de retard sont respectivement déterminés à l'aide d'une courbe caractéristique dépendant de la vitesse de rotation.

6. Procédé selon l'une des revendications précédentes, dans la mesure où elle se réfère aux revendications 2 et 4, dans lequel la détermination (230) du signal de température (430) en tant que signal de sortie de la fonction de transfert dépendant de la vitesse de rotation est effectuée en fonction de la formule suivante : ${T}_{1} ∗ \dot{y} + y = K ∗ \left(u+{T}_{d}∗{u}^{⋅}\right) ,$
u étant le signal de capteur de température (420),
y étant le signal de température (430),
K étant le facteur d'amplification,
T_{D} étant le temps d'avance,
T₁ étant le temps de retard.

7. Procédé selon l'une des revendications précédentes, dans la mesure où elle se réfère aux revendications 2 et 3, dans lequel le facteur d'amplification est déterminé conformément à la formule : $K = \frac{{T}_{Sensor} - {T}_{Fluid} ∗ P}{{T}_{Sensor} ∗ \left(1-P\right)} ,$
K étant le facteur d'amplification,
T_{Sensor} étant la température de capteur,
T_{Fluid} étant la température de fluide de refroidissement, et
P étant le polynôme dépendant de la vitesse de rotation, en particulier d'ordre 2.

8. Procédé selon l'une des revendications précédentes, dans lequel la machine électrique (100) comporte un enroulement enfichable en tant qu'enroulement de stator (122), en particulier selon la technique d'enroulement à broche en U ou à broche en I, et dans lequel une température de l'enroulement enfichable (122) est déterminée à partir du signal de température (430).

9. Procédé selon la revendication 8, dans lequel le capteur de température (130) est disposé sur l'enroulement enfichable (120), en particulier à l'aide d'un support de capteur (131).

10. Unité de calcul (150) qui est conçue pour exécuter toutes les étapes d'un procédé selon l'une des revendications précédentes.

11. Programme informatique qui amène une unité de calcul (150) à exécuter toutes les étapes d'un procédé selon l'une des revendications 1 à 9, lorsqu'il est exécuté sur l'unité de calcul (150).

12. Support d'enregistrement lisible par machine, sur lequel est enregistré un programme informatique selon la revendication 11.
